# NEUE EUROPÄISCHE PATENTSCHRIFT

(11) **EP 0 655 314 B2**
(45) Veröffentlichungstag und Bekanntmachung des Hinweises auf die Entscheidung über den Einspruch: **29.12.2004**
(45) Hinweis auf die Patenterteilung: 04.03.1998
(21) Anmeldenummer: 94118335.2
(22) Anmeldetag: 22.11.1994
(51) Int. Cl.: B29C 49/78, B29C 49/42, F15B 11/06, F15B 21/14

(54) **Mehrfachnutzung von Arbeitsluft**
Multiple use of compressed air
Utilisation multiple d'air de travail

(30) Priorität: 26.11.1993 DE 4340290
(43) Veröffentlichungstag der Anmeldung: 31.05.1995
(73) Patentinhaber: KRONES AG, 93068 Neutraubling (DE)
(72) Erfinder: KRONES AG, 93068 Neutraubling (DE)
(74) Vertreter: Schuster, Thomas, Dipl.-Phys.

(56) Entgegenhaltungen:
- EP-A- 0 328 653
- DE-A- 3 111 925
- GB-A- 2 095 759
- US-A- 3 400 636
- US-A- 4 039 641
- US-A- 4 488 863
- DESIGN ENGINEERING, Nr.12, Dezember 1977 Seiten 51 - 54 W. S. DEASON & M . M. SIMPSON 'The efficient use of compressed air'
- PATENT ABSTRACTS OF JAPAN Bd. 18, Nr. 115 (M-1566) 24 Februar 1994 & JP 05 309 726 A (HIROKAUZU YOSHIOKA) 22 November 1993

## Beschreibung

Die Erfindung betrifft ein Verfahren zum pneumatischen Betrieb einer Vorrichtung, bei dem zur pneumatischen Betätigung mindestens eines Bauelementes Hauptarbeitsluft aus einer Arbeitslufthauptversorgung zugeführt wird und bei dem zusätzlich zur Arbeitslufthauptversorgung mindestens eine Arbeitsluftnebenversorgung verwendet wird, die mit einem geringeren Druckniveau als die Arbeitslufthauptversorgung versehen wird, und bei dem nach der Durchführung einer Arbeitsoperation eines pneumatischen Bauelementes mit einer Druckluftversorgung aus der Arbeitslutthauptversorgung während einer Übergangsphase eine Entlüftung in die Arbeitsluftnebenversorgung durchgeführt wird und bei dem nach der Übergangsphase eine Entlüftung des pneumatischen Bauelementes gegenüber einem Umgebungsdruck durchgeführt wird und bei dem eine zweite pneumatische Arbeitsoperation aus der Arbeitsluftnebenversorgung gespeist wird und bei dem ein Behälter aus einem thermoplastischen Kunststoff gefertigt und ein Vorformling nach einer Temperierung einer Blasstation zugeführt wird, die eine Blasform aufweist, die zur Konturgebung des Behälters vorgesehen ist und in die der temperierte Vorformling eingesetzt wird, sowie bei dem durch Zuführung von Blasluft der Vorformling aufgeweitet wird.

Eine derartige Vorrichtung kann beispielsweise als Blasmaschine zur Herstellung von Behältern, insbesondere Flaschen, ausgebildet sein. Die Formung eines derartigen Behälters kann beispielsweise gemäß einem Verfahren erfolgen, bei dem zunächst ein Vorformling aus Polyäthylenterephthalat (PET) im Spritzgußverfahren hergestellt wird, nach einer Zwischenlagerung der Vorformling erhitzt und anschließend der Blasstation zugeführt wird. Es ist aber auch bekannt, Behälter nach dem Spritz-Blas-Verfahren herzustellen, bei dem ohne Zwischenschaltung einer Erwärmung der Vorformling unmittelbar nach seiner Produktion und nach Erreichen einer ausreichenden Stabilität der Blasstation zugeführt wird. Schließlich ist es auch bekannt, Vorformlinge aus Rohrabschnitten herzustellen, die im Bereich ihres einen Endes verschlossen und im Bereich ihres anderen Endes mit einem geeigneten Mündungsstück versehen werden.

Gemeinsam ist allen Verfahren, daß der Vorformling eine wesentlich kleinere Gestalt aufweist, als der herzustellende Behälter. Der Vorformling wird deshalb innerhalb der Blasstation mit Druckluft beaufschlagt, um ihn zum herzustellenden Behälter umzuformen. Bei diesem Aufblasvorgang erfolgt zusätzlich zur Verringerung der Wandstärke durch die Oberflächenvergrößerung eine Orientierung des Materials. Dies führt dazu, daß die dünne Wandung des Behälters eine sehr hohe Formstabilität aufweist, die den Behälter für eine Vielzahl von Verwendungen geeignet macht.

Zur Durchführung des Blasvorganges sind unterschiedliche Verfahren bekannt. Zum einen ist es möglich, einen einheitlichen Blasdruck zu verwenden, der in den aufzublasenden Vorformling eingeleitet und nach einer ausreichenden Ausformung aus dem fertiggestellten Behälter gegen einen Umgebungsdruck abgelassen wird. Es ist ebenfalls bereits bekannt, zunächst eine Voraufweitung des Vorformlings, die diesen bereits relativ weit an die Form des herzustellenden Behälters annähert, mit einem geringeren Druck durchzuführen, und erst die Ausprägung der feineren Kontur des Behälters mit einem höheren Druck vorzunehmen. Auch bei diesem Verfahren wird nach der Fertigung des Behälters die Blasluft gegen einen Umgebungsdruck entlüftet.

Bei Hochleistungsblasmaschinen, deren übliche Ausstoßleistung im Bereich von 2.000 Flaschen pro Stunde bis 20.000 Flaschen pro Stunde liegt und bei denen das Behältervolumen üblicherweise im Bereich von 0,5 bis 3 l liegt, werden somit erhebliche Mengen an Druckluft benötigt. Zur Bereitstellung der Druckluft sind deshalb leistungsstarke Kompressoren erforderlich, die zum einen aufgrund ihrer Leistungsstärke einen hohen Anschaffungspreis haben und zum anderen durch die Luftkompression mit einer erheblichen Energie gespeist werden müssen.

Grundsätzlich tritt das Problem der Ausnutzung von Arbeitsluft aber bei einer Vielzahl von Maschinen auf. Bei allen bekannten pneumatischen Anordnungen erfolgt eine unmittelbare Entlüftung nach der Durchführung des vorgesehenen Arbeitsschrittes gegen einen Umgebungsdruck. Das gesamte Volumen an benötigter Druckluft ergibt sich somit aus der Summe der Volumen aller pneumatischen Antriebselemente sowie der Betätigungshäufigkeit pro Zeiteinheit. Insbesondere bei großen und komplexen pneumatischen Vorrichtungen sind deshalb entsprechende leistungsstarke und damit teure Kompressoren erforderlich, die durch ihren Energiebedarf entsprechend hohe Energiekosten verursachen.

Aus der EP-328 653-A ist ein Verfahren zum Blasformen von Behältern bekannt, das mit zwei getrennten Luftversorgungssystemen arbeitet. Für den Betrieb des Reckstange wird dabei ein Niedrigdruckluftsystem verwendet.

Aus der US-A-4 488 863 ist es bereits bekannt, im Bereich der Blasformung von Behältern eine Rückführung von Blasluft vorzusehen. Behälter werden mit Blasluft expandiert, die den Behältern mit mindestens zwei unterschiedlichen Druckniveaus zugeführt wird. Aus dem Behälter abfließende Blasluft eines höheren Druckniveaus wird in den Bereich der Blasluft eines niedrigeren Druckniveaus übergeleitet.

Aus der DE-A-31 11 925 ist es bekannt, im Bereich von Thermoformmaschinen eine Drucklufteinsparung dadurch vorzunehmen, daß nach einem Formvorgang aus dem zu formenden Produkt abfließende Druckluft gespeichert und anschließend weiteren Verbrauchern zugeleitet wird. Insbesondere ist daran gedacht, mit der abfließenden Druckluft pneumatische Arbeitsvorgänge von Nebengeräten zu speisen.

In der US-A-3 400 636 wird eine pneumatische Schaltung zur schnellen Überführung von Druckluft aus dem Bereich eines Arbeitszylinders in eine Speichereinheit beschrieben. Die überführte Druckluft soll auf einem niedrigeren Druckniveau einer weiteren Verwendung zugeführt werden. Die schaltungstechnische Realisierung erfolgt mit Hilfe von pneumatischen Ventilen.

Aus der Veröffentlichung DESIGN ENGINEERING, Nr. 12, Dezember 1977, Seiten 51-54, W.S. DEASON & M.M. Simpson "The efficient use of compressed air", Seite 54 ist es bekannt, über ein Mehrwegeventil Druckluft derartig einem Arbeitszylinder zuzuführen, daß sowohl ein Arbeitshub als auch ein Rückhub aktiv von Druckluft unterstützt wird. Abfließende Druckluft, die unter einem hohen Druck steht, kann zwischengespeichert werden und nach einer Entlüftung des Arbeitsbereiches des Zylinders kann diese Druckluft zur Unterstützung eines Rückhubes verwendet werden.

Eine weitere Variante zur Nutzung von Druckluft unterschiedlichen Druckniveaus zur Steuerung von Hub- und Gegenhubbewegungen von Arbeitszylindern wird in der GB-A-2 095 759 erläutert. Die pneumatischen Verkopplungen erfolgen mit Hilfe von Mehrwegeventilen.

Aus der Veröffentlichung "PATENT ABSTRACTS OF JAPAN", vol. 18, no. 115 (M-1566) 24. Februar 1994 & JP-A-53 009 726 (HIROKAUZU YOSHIOKA) 22. November 1993 ist es ebenfalls bekannt, eine Kopplung zwischen einem System mit einem höheren Druckniveau und einem System mit einem niedrigeren Druckniveau vorzunehmen. Durch eine spezielle Ventilansteuerung wird aus einer Formvorrichtung abfließende Druckluft in das System mit dem niedrigeren Druckniveau übergeleitet.

Aufgabe der vorliegenden Erfindung ist es, ein Verfahren der einleitend genannten Art derart zu verbessern, daß der Verbrauch an Arbeisluft reduziert wird.

Diese Aufgabe wird erfindungsgemäß durch ein Verfahren mit dem Merkmalen des Anpruch 1 gelöst.

Durch die Unterteilung der pneumatischen Versorgung in Systeme mit unterschiedlichen Drücken ist es möglich, nach der Durchführung einer Arbeitsoperation jeweils eine höhere Druckebene in eine niedrigere Druckebene zu entlüften. Es wird dabei ausgenutzt, daß in der Regel bei unterschiedlichen Arbeitsoperationen unterschiedliche Drücke erforderlich sind, um das angestrebte Arbeitsresultat zu erzielen. So wird in der Regel für die Durchführung einer Vorschubbewegung bei der Durchführung einer Arbeitsoperation ein höherer Druck als bei einer Rückführbewegung benötigt. Ebenfalls erfolgen beispielsweise bestimmte Bewegungen entgegen der Schwerkraft und andere Bewegungen mit Schwerkraftunterstützung. Durch die sich an die Druckluftüberleitung anschließende Entlüftung gegenüber dem Umgebungsdruck wird gewährleistet, daß bei einer Rückführbewegung kein verbleibender Druck Gegenkräfte erzeugt. Darüber hinaus werden Gefährdungen durch eingeschlossene Luftmengen vermieden. In Abhängigkeit von der Feinheit der möglichen Abstufungen und der Unterschiedlichkeit der durchzuführenden Arbeitsoperationen erscheint es denkbar, eine Mengeneinsparung von etwa 20% bis 50% des Ausgangsvolumenstromes zu erzielen. Liegen keine unterschiedlichen Anforderungen an die Verstellkräfte vor, so kann über die von den Drücken beaufschlagten Flächen eine Anpassung vorgenommen werden.

Eine Anwendung des Verfahrens in einem technischen Gebiet mit einem relativ großen pneumatischen Einsparungspotential erfolgt dadurch, daß ein Behälter aus einem thermoplastischen Kunststoff gefertigt wird, bei dem ein Vorformling nach einer Temperierung einer Blasstation zugeführt wird, die eine Blasform aufweist, die zur Konturgebung des Behälters vorgesehen ist und in die der temperierte Vorformling eingesetzt wird sowie bei dem durch Zuführung von Blasluft der Vorformling aufgeweitet wird und mindestens ein Teil der Blasluft nach einer Formung des Behälters in den Bereich der Arbeitsluftnebenversorgung übergeleitet wird.

Eine Anwendung des Verfahrens zur Durchführung unterschiedlicher Positionierbewegungen im Bereich eines Bauelementes erfolgt dadurch, daß der Behälter von einer Reckstange gereckt wird und eine Bewegung der Reckstange zur Reckung des Vorformlings durch die Arbeitslufthauptversorgung und ein Rückhub der Reckstange durch die Arbeitsluftnebenversorgung gespeist wird.

Eine weitere Variante des Verfahrens besteht darin, daß bei der Durchführung von Positionierbewegungen mit einer vertikalen Komponente bei der Auswahl der für die Positionierbewegungen erforderlichen Drücke die die Bauelemente bei unterschiedlichen Bewegungsrichtungen beaufschlagende Schwerkraft berücksichtigt wird.

Zur Überbrückung von prozeßabhängigen Zeitabständen zwischen einem Ablassen von Druckluft und einer Wiederverwendung der Druckluft sowie zur Vergleichmäßigung von Druckschwankungen wird vorgeschlagen, daß aus dem Bereich der Arbeitslufthauptversorgung in den Bereich der Aibehsluftnebenversorgung überströmende Druckluft mindestens zeitweise gespeichert wird.

Eine Vermeidung komplexer pneumatischer Strukturen kann dadurch erfolgen, daß im Bereich eines pneumatischen Bauelementes, das sowohl von der Arbeitslufthauptversorgung als auch von der Arbeitsluftnebenversorgung zur Durchführung unterschiedlicher Bewegungen gespeist wird, eine lokale Druclduftspeicherung für übergeleitete Arbeitsluft verwendet wird.

Eine Verwendung von Druckluftspeichern kann dadurch vermieden werden, beziehungsweise die Dimensionierung vorhandener Druckluftspeicher kann dadurch reduziert werden, daß durch die Überleitung von dem pneumatischen Bauelement entströmender Hauptarbeitsluft in den Bereich eines weiteren pneumatischen Bauelementes eine Verkopplung mehrerer im wesentlichen baugleicher, jedoch zeitlich versetzt nacheinander angesteuerter, Baueinheiten durchgeführt wird.

Eine weitere Reduzierung von pneumatischen Verkopplungen kann dadurch erfolgen, daß im Bereich der Arbeitsluftnebenversorgung eine von der Überleitung von aus dem Bereich des pneumatischen Bauelementes entströmender Hauptarbeitsluft unabhängige Einspeisung von Nebenarbeitsluft vorgesehen wird.

Hierdurch kann eine Arbeitsbewegung beispielsweise zunächst mit übergeleiteter Hauptarbeitsluft erfolgen. Anschließend wird separate Nebenarbeitsluft eingespeist, die bei bestimmten Anwendungen auch ein Druckniveau wie die Hauptarbeitsluft aufweisen kann.

Zur Sicherstellung der Durchführung von pneumatischen Funktionen bei einem Auftreten von partiellen Störungen wird vorgeschlagen, daß das pneumatische Bauelement derart betrieben wird, daß für die Durchführung einer nachgeordneten Positionierbewegung zunächst aus dem Bereich der Arbeitslufthauptversorgung übergeleitete Druckluft und anschließend eine einer unabhängigen Druckluftquelle entströmende Nebenarbeitsluft verwendet wird.

Eine typische Anwendung wird dadurch realisiert, daß zur Formung eines Behälters aus einem thermoplastischen Kunststoff mindestens eine zur Aufnahme eines temperierten Vorformlinges vorgesehene Blasstation angeordnet ist, die mit einer Blasform versehen ist, die eine an den zu formenden Behälter angepaßte Innenkontur aufweist und die zur Expansion des Vorformlings mit einer Blasluftversorgung versehen ist.

Zur Ermöglichung einer mechanischen Steuerung der Schaltvorgänge wird vorgeschlagen, daß zur Durchführung der wesentlichen pneumatischen Umschaltvorgänge eine mit Luftnuten versehene Steuerscheibe vorgesehen ist, korrespondierend zu der eine rotationsfähig gelagerte Abnahmescheibe mit Abnahmebohrungen geführt ist.

Eine besonders einfache Ausführungsform kann dadurch bereitgestellt werden, daß mindestens zwei Luftnuten der Steuerscheibe unterschiedlichen durchzuführenden Arbeitsbewegungen zugeordnet sind, eine der Arbeitsbewegungen mit einem relativ zur Durchführung der anderen Arbeitsbewegung höheren Druck durchführbar ist, daß die Arbeitsnuten durch Trennelemente in druckdicht gegeneinander abgegrenzte Segmente unterteilt sind und daß mindestens ein Segment der einen Luftnut zur Druckluftüberleitung mit mindestens einem Segment einer benachbarten Luftnut verbunden ist.

Eine Abdichtung der Steuerscheibe gegenüber der Abnahmescheibe kann durch Flächenpressung erfolgen.

Zur Entflechtung der durchzuführenden Schaltfunktionen wird vorgeschlagen, daß zur Durchführung der Umschaltvorgänge mindestens ein schaltbares Ventil vorgesehen ist.

Insbesondere ist daran gedacht, daß mindestens eines der Ventile als elektromagnetisches Ventil ausgebildet ist.

In der Zeichnung sind Ausführungsbeispiele der Erfindung schematisch dargestellt. Es zeigen:
- Fig.: 1 eine teilweise geschnittene Prinzipdarstellung einer Blasstation mit Reckeinrichtung,
- Fig. 2: eine Prinzipdarstellung von Luftnuten im Bereich einer Steuerscheibe mit separater Speichernut,
- Fig. 3: eine Prinzipdarstellung einer Steuerscheibe mit Luftnuten und mit einer Überleitungsnut zwischen zwei benachbarten Luftnuten,
- Fig. 4: eine Prinzipdarstellung einer Steuerscheibe mit korrespondierender Abnehmerscheibe,
- Fig. 5: ein schematisches Bild zur Veranschaulichung einer Mehrfachnutzung von Arbeitsluft im Bereich einer Vorrichtung zur Ausführung von Positionierbewegungen in unterschiedlichen Richtungen,
- Fig. 6: eine schematische Darstellung zur Mehrfachnutzung von Arbeitsluft im Bereich von unterschiedlichen Vorrichtungen,
- Fig. 7: eine Skizze eines Druckverlaufes im Bereich einer Folgestation mit Überleitungsphase und anschließender Zuführung separater Druckluft eines vorgesehenen Druckpegels und
- Fig. 8: einen modifizierten Druckverlauf im Bereich einer der Folgestation vorhergehenden Station.

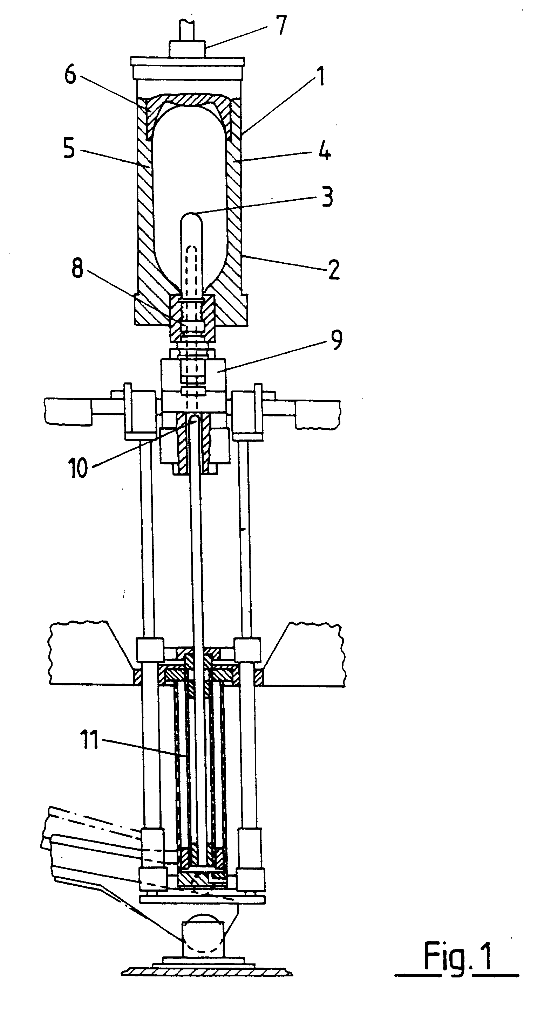

Die Vorrichtung zur Durchführung von Arbeitsoperationen durch pneumatische Betätigung kann beispielsweise als eine Maschine zur Blasformung von Behältern ausgebildet sein. Der grundsätzliche Aufbau einer derartigen Vorrichtung ist in Fig. 1 skizziert.

Die Vorrichtung zur Formung eines Behälters besteht im wesentlichen aus einer Blasstation (1), die mit einer Form (2) versehen ist, in die ein Vorformling (3) einsetzbar ist. Der Vorformling (3) kann ein spritzgegossenes Teil aus Polyäthylenterephthalat sein. Zur Ermöglichung eines Einsetzens des Vorformlings (3) in die Form (2) und zur Ermöglichung eines Herausnehmens des fertigen Behälters besteht die Form (2) aus Formhälften (4,5) und einem Bodenteil (6), das von einer Hubvorrichtung (7) positionierbar ist. Der Vorformling (3) kann im Bereich der Blasstation (1) von einem Transportdorn (8) gehalten sein, der gemeinsam mit dem Vorformling (3) eine Mehrzahl von Behandlungsstationen innerhalb der Vorrichtung durchläuft. Es ist aber auch möglich, den Vorformling (3) beispielsweise über Zangen oder andere Handhabungsmittel direkt in die Form (2) einzusetzen.

Zur Ermöglichung einer Druckluftzuleitung ist unterhalb des Transportdornes (8) ein Anschlußkolben (9) angeordnet, der dem Vorformling (3) Druckluft zuführt und gleichzeitig eine Abdichtung relativ zum Transportdorn vornimmt. Bei einer abgewandelten Konstruktion ist es grundsätzlich aber auch denkbar, feste Druckluftzuleitungen zu verwenden.

Eine Reckung des Vorformlinges (3) erfolgt mit Hilfe einer Reckstange (10), die von einem Zylinder (11) positioniert wird. Grundsätzlich ist es aber auch denkbar, eine mechanische Positionierung der Reckstange (10) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (1) auf einem rotierenden Blasrad angeordnet sind. Eine Verwendung von Zylindern (11) ist zweckmäßig, wenn ortsfest angeordnete Blasstationen (1) vorgesehen sind.

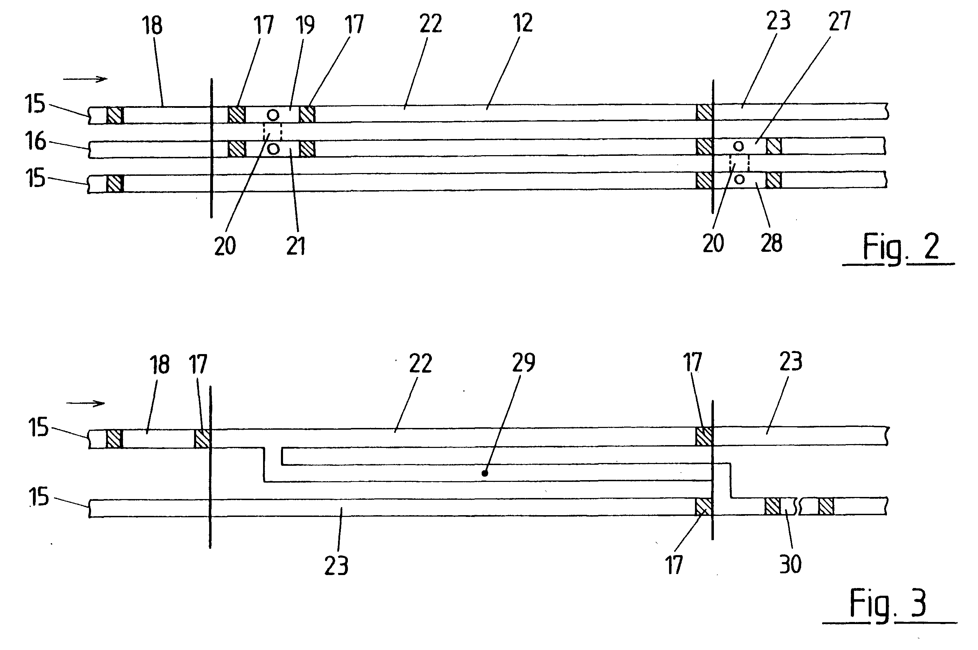

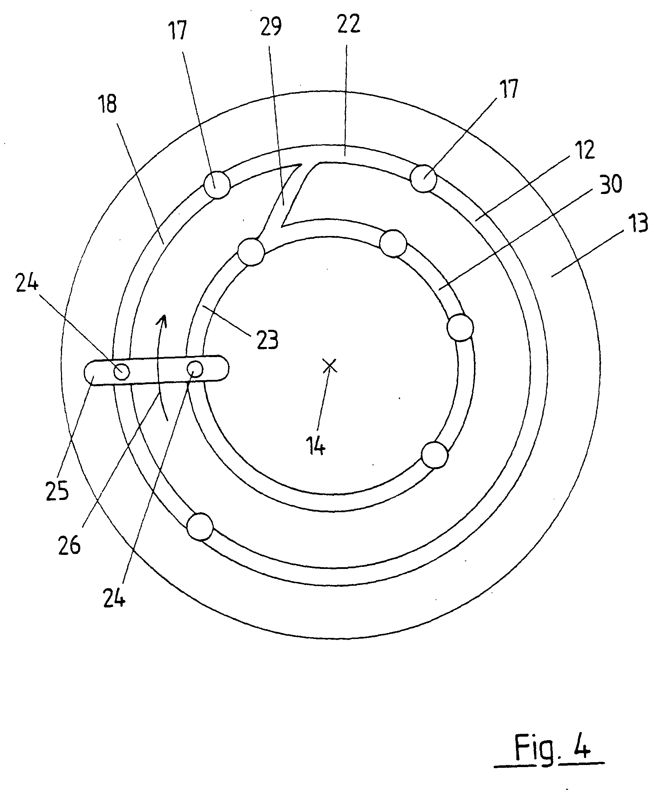

Zur Veranschaulichung der Mehrfachnutzung von Arbeitsluft wurde in Fig. 2 eine vereinfachte Darstellung von Luftnuten (12) einer Steuerscheibe (13) vorgenommen. Tatsächlich verlaufen die Luftnuten (12) entsprechend der Darstellung in Fig. 4 radial zu einem Mittelpunkt (14) der Steuerscheibe (13). Der grundsätzliche Ablauf kann aber einfacher der linearen Darstellung in Fig. 2 und Fig. 3 entnommen werden.

Gemäß der Darstellung in Fig. 2 sind zwei Arbeitsnuten (15) und eine Speichernut (16) vorgesehen. An die Arbeitsnuten (15) können jeweils gleichartige pneumatische Bauelemente angeschlossen sein. Die Luftnuten (12) sind durch Trennelemente (17) in gegeneinander abgeschottete Bereiche unterteilt. Hierdurch ist es möglich, entlang des Verlaufes einer Luftnut (12) Druckbereiche mit unterschiedlichen Druckpegeln anzuordnen. Bei der in Fig. 2 oben dargestellten Arbeitsnut (15) ist ausgehend vom ersten Trennelement (17) im linken Bereich zunächst ein Hauptsegment (18) angeordnet, an das sich ein Überleitungssegment (19) anschließt. Das Überleitungssegment (19) ist durch eine Querbohrung (20) mit einem Aufnahmesegment (21) in der Speichernut (16) verbunden.

Im Bereich der Arbeitsnut (15) schließt sich an das Überleitungssegment (19) ein Haltesegment (22) an, das von einem Entlüftungssegment (23) gefolgt ist. Im Bereich des Hauptsegmentes (18) kann beispielsweise ein Druck von etwa 6 bar vorgesehen sein, im Bereich des Überleitungssegmentes (19) erfolgt durch Luftüberleitung in das Aufnahmesegment (21) eine Druckreduzierung auf etwa 3 bar. Der Druck von 3 bar wird im Bereich des Haltesegmentes (22) aufrechterhalten. Im Bereich des Entlüftungssegmentes (23) erfolgt eine Reduktion des Druckes auf Umgebungsdruck. Die Zufuhr der jeweiligen Drücke erfolgt durch Abnahmebohrungen (24) im Bereich einer Abnahmescheibe (25), die korrespondierend zur Steuerscheibe (13) angeordnet ist. Die Abnahmescheibe (25) rotiert relativ zur ortsfest angeordneten Steuerscheibe (13) in Richtung einer Drehorientierung (26).

Das Aufnahmesegment (21) steht mit einem Druckspeicher in Verbindung, aus dem die gespeicherte Druckluft bei Bedarf wieder entnommen werden kann. Eine Überleitung der gespeicherten Druckluft erfolgt beispielsweise im Bereich eines Entnahmesegmentes (27), das mit einem Abgabesegment (28) im Bereich der in Fig. 2 unten eingezeichneten Arbeitsnut (15) angeordnet ist.

Bei einer Anwendung auf die eingangs beschriebene Vorrichtung zur Blasformung von Behältern ist es beispielsweise möglich, bei einer Unterteilung der Vorrichtung in mehrere Blasstationen (1) jeder Blasstation (1) einen separaten Luftspeicher zuzuordnen. Dieser kann insbesondere auch mit einander folgenden unterschiedlichen Drücken gefüllt werden. Bei einer vollständigen Entkopplung der pneumatischen Funktionen ist es zum Beispiel denkbar, zunächst der Druck der Arbeitslufthauptversorgung (31) dazu verwendet wird einen Reckvorgang durchzuführen. Nach entsprechender Drucküberleitung und Entlüftung kann das gespeicherte Druckvolumen dann für eine Rückfahrbewegung der Reckstange (10) verwendet werden. Bei einem nachfolgenden Produktionsschritt kann die zwischengespeicherte Druckluft wiederum für die Durchführung einer Schließbewegung der Formhälften (4,5) verwendet werden und in einer letzten Druckstufe kann eine Verriegelung der Formhälften (4,5) vorgenommen werden.

Bei allen Verfahrensvarianten kann ausgenutzt werden, daß in der Regel für das Halten einer bestimmten Positionierung ein geringerer Druck als zu einer schnellen Einnahme der vorgesehenen Positionierung erforderlich ist. Nach der Durchführung der Einnahme der Positionierung kann deshalb der Druck abgesenkt werden. Bei allen Verfahrensschritten kann berücksichtigt werden, ob für bestimmte Bewegungsrichtungen unterschiedliche Positionierkräfte erforderlich sind, die beispielsweise aus Materialwiderständen eines zu verformenden Materials oder der Einwirkung von Gewichtskräften resultieren.

Fig. 3 zeigt eine Verfahrensvariante, bei der eine Überleitung von Arbeitsiuft direkt zwischen den Arbeitsnuten (15) erfolgt. Hier ist somit kein separater Luftspeicher vorgesehen. Die Überleitung erfolgt mit Hilfe eines Verbindungssegmentes (29).

Bei der Verfahrensvariante gemäß Fig. 2 liegt somit keine Verkopplung von Blasstationen miteinander vor, sondern es werden lediglich Funktionen im Bereich einer einzelnen Blasstation miteinander verkoppelt. Bei der Ausführungsform gemäß Fig. 3 findet hingegen eine Verkopplung mehrerer Blasstationen miteinander statt. Zur Vermeidung von Funktionsproblemen bei einem Anlauf der Maschine nach einer Störung oder bei einer Erstinbetriebnahme ist es zweckmäßig, nach dem Verbindungssegment (29) ein Stützluftsegment (30) anzuordnen. Durch das Stützluftsegment (30) wird gewährleistet, daß auch bei einer fehlenden Überleitung von Druckluft mit Hilfe des Verbindungselementes (29) die vorgesehene Funktion durchgeführt werden kann. Mechanische Beschädigungen durch nichtdurchgeführte Bewegungsoperationen werden hierdurch vermieden.

Fig. 4 zeigt eine vereinfachte Darstellung zur Verfahrensvariante gemäß Fig. 3. Es wurde hier jedoch die konkrete tatsächlich gegebene radiale Anordnung der Luftnuten (12) eingetragen.

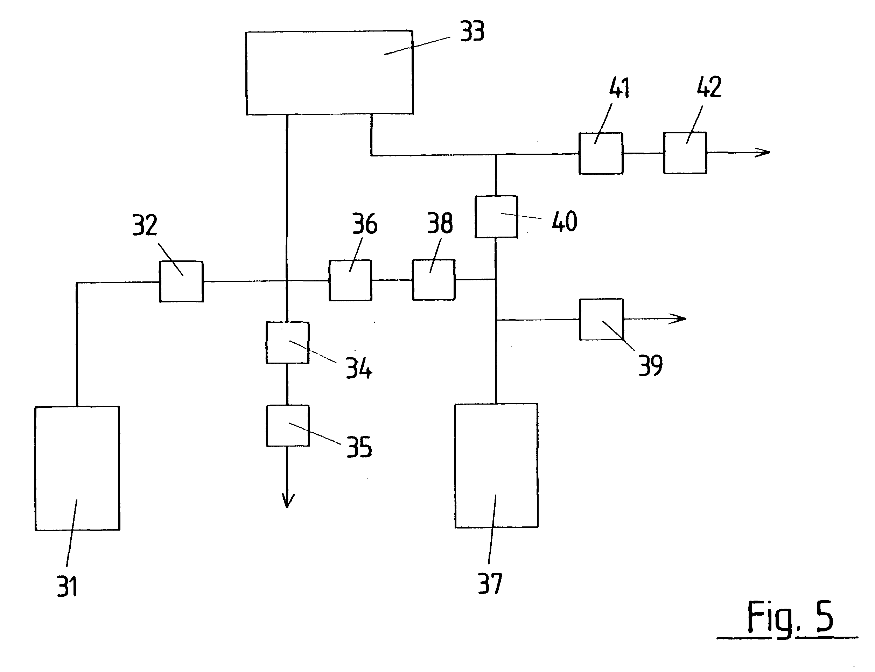

Eine stark schematisierte Funktionsdarstellung bei einer Verwendung von steuerbaren Schaltventilen zeigt Fig. 5. Bei dieser Variante wird Hauptarbeitsluft aus einer Arbeitslufthauptversorgung (31) über ein Hauptventil (32) in den Bereich eines pneumatischen Bauelementes (33) geleitet. Zur Durchführung einer vollständigen Entlüftung sind ein Hauptentlüftungsventil (34) sowie ein Hauptschalldämpfer (35) vorgesehen. Nach einer Durchführung der vorgesehenen Bewegung mit Hilfe der Hauptarbeitsluft erfolgt durch ein Überleitungsventil (36) eine Druckluftüberleitung in den Bereich einer Arbeitsluftnebenversorgung (37). Die Druckluftüberleitung kann unter Einschaltung eines Druckbegrenzers (38) erfolgen, der einen zu hohen Druck im Bereich der Arbeitsluftnebenversorgung (37) verhindert. Alternativ oder ergänzend zur Arbeitsluftnebenversorgung (37) kann ein Druckluftspeicher verwendet werden, der die übergeleitete Druckluft aufnimmt.

Zusätzlich ist im Bereich der Arbeitsluftnebenversorgung (37) eine Drucküberwachung (39) angeschlossen. Eine Zuführung von Arbeitsnebenluft erfolgt mit Hilfe eines Nebenluftventils (40). Zur Durchführung einer Entlüftung im Bereich der Arbeitsnebenluft sind ein Nebenentlüftungsventil (41) sowie ein Nebenschalldämpfer (42) vorgesehen.

Eine Funktion könnte somit derart durchgeführt werden, daß zunächst das Hauptventil (32) öffnet und Druckfuft in den Bereich des pneumatischen Bauelementes (33) leitet. Nach der Durchführung der Arbeitsoperation schließt das Hauptventil (32) und das Überleitungsventil (36) öffnet. Nachdem das Überleitungsventil (36) wieder geschlossen hat und nach Beeendigung einer gegebenenfalls erforderlichen Stützzeit öffnet das Hauptventil (34) und leitet die Druckluft gegenüber einer Umgebung ab. Für die Zuführung von Arbeitsnebenluft öffnet das Nebenluftventil (40) und nach der Durchführung der zugeordneten Arbeitsoperation und nach einem Schließen des Nebenluftventils (40) wird abschließend das Nebenentlüftungsventil (41) geöffnet.

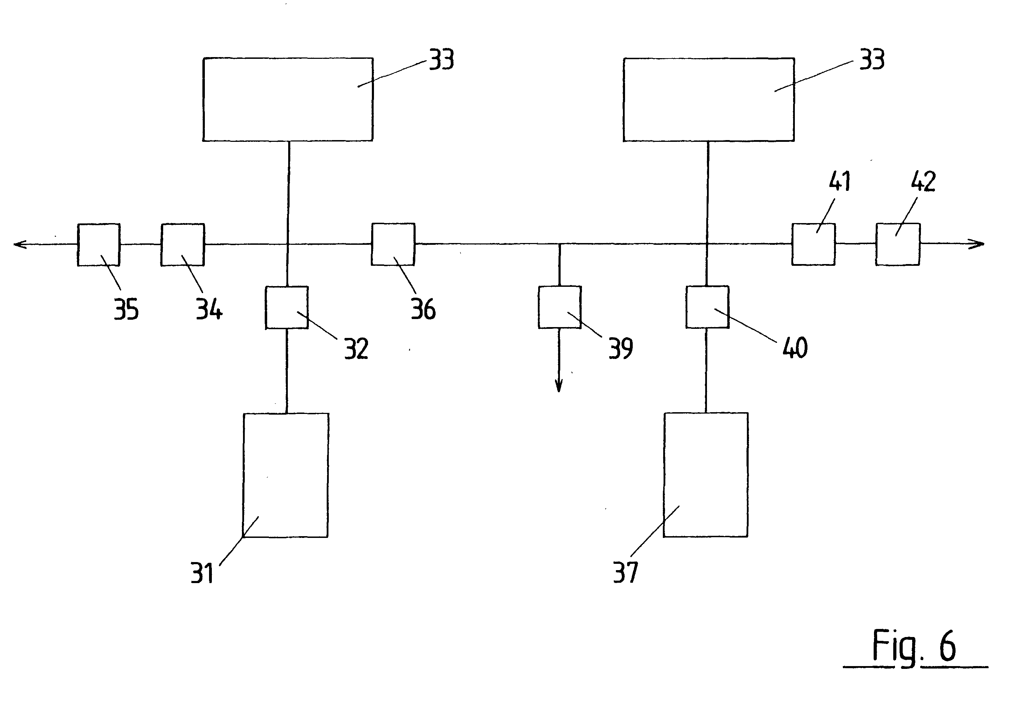

Eine Variante, bei der zwei unterschiedliche pneumatische Bauelemente (33) miteinander verkoppelt sind, zeigt Fig. 6. Die Anordnung der Arbeitslufthauptversorgung (31), des Hauptventiles (32), des Hauptentlüftungsventiles (34) sowie des Hauptschalldämpfers (35) entspricht im wesentlichen der Ausführungsform gemäß Fig. 5. Mit Hilfe des Überleitungsventils (36) erfolgt bei der Ausführungsform gemäß Fig. 6 jedoch eine Überleitung von Hauptarbeitsluft aus dem Bereich des pneumatischen Bauelementes (33) nach der Durchführung eines zugeordneten Arbeitsschrittes in den Bereich eines anderen pneumatischen Bauelementes (33) zur Durchführung eines Arbeitsschrittes mit einem geringeren Druckniveau.

Das geringere Druckniveau hat bei beliebigen Ausführungsformen nicht zwangsläufig die Folge, daß auch eine geringere Kraft für die nachgeordnete Arbeitsbewegung erforderlich ist. Bekanntlich ergibt sich im Bereich der Pneumatik die ausgeübte Kraft aus dem Produkt des Druckes des Mediums und der beaufschlagten Fläche. Wird somit für den pneumatischen Kolben im Bereich des nachgeordneten pneumatischen Bauelementes eine größere Fläche bereitgestellt, so ist auch eine entsprechende größere Kraftentfaltung möglich. Aufgrund der zur Verfügung stehenden Druckvolumen ist jedoch der durchzuführende Hub im Bereich des nachgeordneten pneumatischen Elementes bei einer alleinigen Druckluftversorgung durch das Überleitungsventil (36) begrenzt. Eine Vergrößerung des möglichen Hubbereiches kann deshalb durch eine separate zusätzliche Arbeitsluftnebenversorgung (37) erfolgen, die nicht lediglich eine Speicherfunktion für Druckluft aus dem Bereich des Überleitungsventils (36) ausübt, sondern die in der Lage ist, eigenständig Nebenarbeitsluft einzuspeisen.

Die Verbindung des Überleitungsventils (36) mit dem nachgeschalteten pneumatischen Bauelement (33) erfolgt hier von der Arbeitsluftnebenversorgung (37) aus gesehen hinter dem Nebenluftventil (40). Hierdurch erfolgt eine zusätzliche Entkopplung gegenüber der Arbeitsluftnebenversorgung (37). Grundsätzlich ist aber auch bei dieser Ausführungsform die Schaltungsvariante gemäß Fig. 5 einsetzbar.

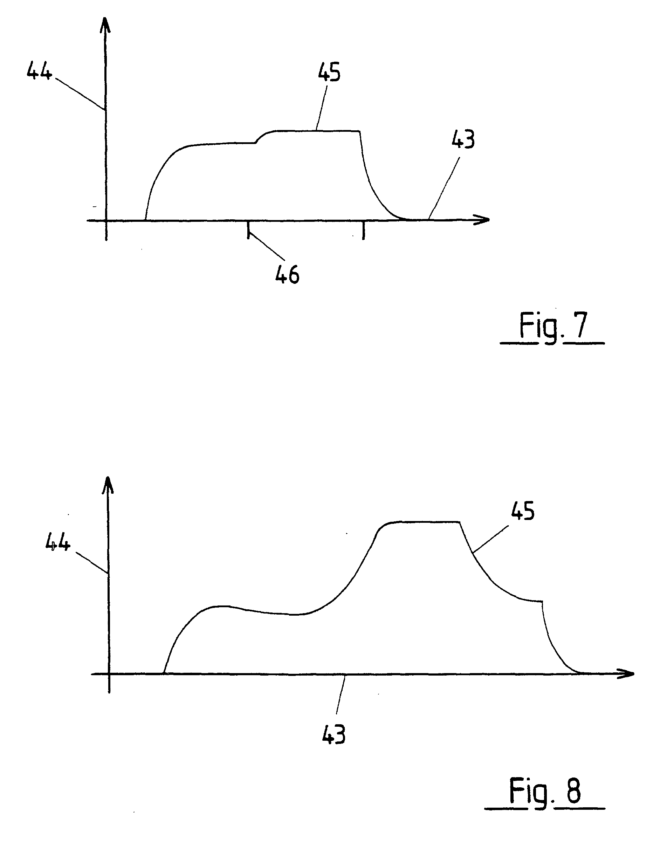

Zur Veranschaulichung eines möglichen Druckverlaufes im Bereich des nachgeschalteten Bauelementes (33) ist in Fig. 7 ein Druck-Zeit-Diagramm eingezeichnet. Es sind eine Zeitachse (43) und eine Druckachse (44) vorgesehen. In einem aus der Zeitachse (43) und der Druckachse (44) abgebildeten Koordinatenkreuz ist ein Druckverlauf (45) dargestellt, der bis zu einem Umschaltzeitpunkt (46) den Druckverlauf im Bereich des nachgeschalteten pneumatischen Bauelementes (33) durch die Überleitung von Hauptarbeitsluft und nach dem Umschaltzeitpunkt (46) den Druckverlauf durch Zuschaltung der Arbeitsluftnebenversorgung (37) wiedergibt. Der eingetragene Druckanstieg im Bereich des Umschaltzeitpunktes (46) wurde hier willkürlich angenommen, ob eine Druckveränderung zu diesem Zeitpunkt eintritt und wie groß diese gegebenenfalls ist, hängt von der Menge der überleitbaren Hauptarbeitsluft und der Funktion der Drucküberwachung (39) ab.

Fig. 8 zeigt den korrespondierenden Druckverlauf des vorhergehenden pneumatischen Bauelementes (33) mit gedehnter Zeitachse (43). Der Druckverlauf steigt zunächst an und bleibt während der Durchführung der Hubbewegung durch Strömungseffekte zunächst auf einem etwa gleichen Niveau. Nach Erreichen und Halten des Endniveaus erfolgt eine erste Druckreduzierung durch Druckluftüberleitung und anschließend eine weitere Druckreduzierung durch Entlüftung gegen die Umgebung.

## Patentansprüche

1. Verfahren zum pneumatischen Betrieb einer Vorrichtung, bei dem zur pneumatischen Betätigung mindestens eines Bauelementes (33) Hauptarbeitsluft aus einer Arbeitslufthauptversorgung (31) zugeführt wird und bei dem zusätzlich zur Arbeitslufthauptversorgung (31) mindestens eine Arbeitsluftnebenversorgung (37) verwendet wird, die mit einem geringeren Druckniveau als die Arbeitslufthauptversorgung (31) versehen wird, und bei dem nach der Durchführung einer Arbeitsoperation eines pneumatischen Bauelementes (33) mit einer Druckluftversorgung aus der Arbeitslufthauptversorgung (31) während einer Übergangsphase eine Entlüftung in die Arbeitsluftnebenversorgung (37) durchgeführt wird und bei dem nach der Übergangsphase eine Entlüftung des pneumatischen Bauelementes (33) gegenüber einem Umgebungsdruck durchgeführt wird und bei dem eine zweite pneumatische Arbeitsoperation aus der Arbeitsluftnebenversorgung (37) gespeist wird und bei dem ein Behälter aus einem thermoplastischen Kunststoff gefertigt und ein Vorformling (3) nach einer Temperierung einer Blasstation (1) zugeführt wird, die eine Blasform (2) aufweist, die zur Konturgebung des Behälters vorgesehen ist und in die der temperierte Vorformling (3) eingesetzt wird, sowie bei dem durch Zuführung von Blasluft der Vorformling aufgeweitet wird, **dadurch gekennzeichnet, daß** der Behälter von einer Reckstange (10) gereckt wird und daß von der Arbeitsluftnebenversorgung (37) ein die Reckstange (10) positionierender Reckzylinder (11) während mindestens eines Teiles der Positionierbewegung der Reckstange (10) mit aus der Arbeitslufthauptversorgung ( 31) nach Durchführung der ersten Arbeitsoperation in die Arbeitsluftnebenversorgung (37) übergeleiteter Druckluft gespeist wird, wobei eine Bewegung der Reckstange (10) zur Reckung des Vorformlings (3) durch die Arbeitslufthauptversorgung (31) und ein Rückhub der Reckstange (10) durch die Arbeitsluftnebenversorgung (37) gespeist wird.

2. Verfahren nach Anspruch 1, **dadurch gekennzeichnet, daß** mindestens ein Teil der Blasluft nach einer Formung des Behälters in den Bereich der Arbeitsluftnebenversorgung (37) übergeleitet wird.

3. Verfahren nach Anspruch 1, **dadurch gekennzeichnet, daß** bei der Durchführung von Positionierbewegungen mit einer vertikalen Komponente bei der Auswahl der für die Positionierbewegungen erforderlichen Drücke die die Bauelemente bei unterschiedlichen Bewegungsrichtungen beaufschlagende Schwerkraft berücksichtigt wird.

4. Verfahren nach einem der Ansprüche 1 bis 3, **dadurch gekennzeichnet, daß** aus dem Bereich der Arbeitslufthauptversorgung (31) in den Bereich der Arbeitsluftnebenversorgung (37) überströmende Druckluft mindestens zeitweise gespeichert wird.

5. Verfahren nach einem der Ansprüche 1 bis 4, **dadurch gekennzeichnet, daß** im Bereich eines pneumatischen Bauelementes (33), das sowohl von der Arbeitslufthauptversorgung (31) als auch von der Arbeitsluftnebenversorgung (37) zur Durchführung unterschiedlicher Bewegungen gespeist wird, eine lokale Druckluftspeicherung für übergeleitete Arbeitsluft verwendet wird.

6. Verfahren nach einem der Ansprüche 1 bis 5, **dadurch gekennzeichnet, daß** durch die Überleitung von dem pneumatischen Bauelement entströmender Hauptarbeitsluft in den Bereich eines weiteren pneumatischen Bauelementes (33) eine Verkopplung mehrerer im wesentlichen baugleicher, jedoch zeitlich versetzt nacheinander angesteuerter Baueinheiten durchgeführt wird.

7. Verfahren nach einem der Ansprüche 1 bis 6, **dadurch gekennzeichnet, daß** im Bereich der Arbeitsluftnebenversorgung (37) eine von der Überleitung von aus dem Bereich des pneumatischen Bauelementes (33) entströmender Hauptarbeitsluft unabhängige Einspeisung von Nebenarbeitsluft vorgesehen wird.

8. Verfahren nach einem der Ansprüche 1 bis 7, **dadurch gekennzeichnet, daß** das pneumatische Bauelement (33) derart betrieben wird, daß für die Durchführung einer nachgeordneten Positionierbewegung zunächst aus dem Bereich der Arbeitslufthauptversorgung (31) übergeleitete Druckluft und anschließend eine einer unabhängigen Druckluftquelle entströmende Nebenarbeitsluft verwendet wird.

## Claims

1. Process for the pneumatic operation of a device, in which primary operating air is supplied from an operating air primary supply (31) for the pneumatic actuation of at least one structural element (33) and in which in addition to the operating air primary supply (31) at least one operating air secondary supply (37) is used which is provided with a lower pressure level than the operating air primary supply (31), and in which after the performance of a working operation of a pneumatic structural element (33) with a compressed air supply from the operating air primary supply (31) a venting into the operating air secondary supply (37) is carried out during a transitional phase and in which after the transitional phase a venting of the pneumatic structural element (33) with respect to an ambient pressure is carried out and in which a second pneumatic working operation is supplied from the operating air secondary supply (37) and in which a container is produced from a thermoplastic synthetic material and a parison (3) is supplied after a tempering to a blow station (1) which has a blow mould (2) which is provided for the contour-forming of the container and into which the tempered parison (3) is inserted, and in which the parison (3) is expanded by supply of blowing air, **characterized in that** the container is stretched by a stretching rod (10) and that a stretching cylinder (11) positioning the stretching rod (10) is supplied by the operating air secondary supply (37) during at least a part of the positioning movement of the stretching rod (10) with compressed air transferred into the operating air secondary supply (37) from the operating air primary supply (31) after performance of the first working operation, wherein a movement of the stretching rod (10) to stretch the parison (3) is supplied by the operating air primary supply (31) and a return stroke of the stretching rod (10) is supplied by the operating air secondary supply (37).

2. Process according to Claim 1, **characterized in that** at least a part of the blowing air is transferred into the region of the operating air secondary supply (37) after a moulding of the container.

3. Process according to Claim 1, **characterized in that** the force of gravity to which the structural elements are exposed in different movement directions is taken into account when carrying out positioning movements with a vertical component when selecting the pressures required for the positioning movements.

4. Process according to one of Claims 1 to 3, **characterized in that** compressed air flowing over from the region of the operating air primary supply (31) into the region of the operating air secondary supply (37) is stored at least temporarily.

5. Process according to one of Claims 1 to 4, **characterized in that** a local compressed air storage for transferred operating air is used in the region of a pneumatic structural element (33) which is supplied by both the operating air primary supply (31) and by the operating air secondary supply (37) to carry out different movements.

6. Process according to one of Claims 1 to 5, **characterized in that** a coupling of several structural units which are substantially identical in structure but are actuated after each other in a manner offset in time is carried out by means of the transfer of primary operating air flowing from the pneumatic structural element into the region of a further pneumatic structural element (33).

7. Process according to one of Claims 1 to 6, **characterized in that** a supply of secondary operating air independent of the transfer of primary operating air flowing from the region of the pneumatic structural element (33) is provided in the region of the operating air secondary supply (37).

8. Process according to one of Claims 1 to 7, **characterized in that** the pneumatic structural element (33) is operated in such a way that compressed air transferred from the region of the operating air primary supply (31 ) is initially used and a secondary operating air flowing from an independent compressed air source is subsequently used to carry out a subordinate positioning movement.

## Revendications

1. Procédé pour le fonctionnement pneumatique d'un dispositif dans le cas duquel pour l'actionnement pneumatique d'au moins un élément de construction (33), de l'air de travail principal est amené d'une source d'alimentation principale en air de travail (31) et dans le cas duquel, en plus de la source d'alimentation principale en air de travail (31), il est utilisé au moins une source d'alimentation secondaire en air de travail (37) qui présente un niveau de pression plus faible que celui de la source d'alimentation principale en air de travail (31), et dans le cas duquel, après l'exécution d'une opération de travail d'un élément de construction pneumatique que (33) grâce à une alimentation en air sous pression fournie par la source d'alimentation principale en air de travail (31 ), au cours d'une phase de transition, il est effectué une désaération dans la source d'alimentation secondaire en air de travail (37), et dans le cas duquel, après la phase de transition, il est effectué une désaération de l'élément de construction pneumatique (33) par rapport à une pression environnante et dans le cas duquel une deuxième opération de travail pneumatique est produite par une alimentation à partir de la source d'alimentation secondaire en air de travailler dans le cas duquel un récipient est fabriqué à partir d'une matière synthétique thermoplastique et une ébauche première formée (3), après avoir été amenée à une température convenable, est amenée à un poste de soufflage (1) comportant une forme ou matrice de soufflage (2) qui a été prévue pour donner son profil au récipient et dans laquelle l'ébauche première formée (3) amenée à une température convenable est introduite, de même que dans le cas duquel, sous l'effet de l'arrivée d'air de soufflage, l'ébauche première formée est dilatée, le procédé étant **caractérisé en ce que** le récipient est étiré par une barre d'étirage (10) et **en ce que** par la source d'alimentation secondaire en air de travail (37), un cylindre d'étirage (11) qui positionne la barre d'étirage (10), au cours d'une partie au moins du mouvement de positionnement de la barre d'étirage (10), est alimenté par de l'air sous pression transféré de la source l'alimentation principale en air de travail (31) après exécution de la première opération de travail, à la source d'alimentation secondaire en air de travail (37), où un mouvement de la barre d'étirage (10) en vue de l'étirage de l'ébauche première formée (3) est produit par alimentation par la source d'alimentation principale en air de travail (31) et **en ce qu'**une course de retour de la barre d'étirage (10) est produit par alimentation par la source d'alimentation secondaire en air de travail (37).

2. Procédé suivant la revendication 1, **caractérisé en ce qu'**une partie au moins de l'air de soufflage, après un formage du récipient, est transféré dans la zone de la source d'alimentation secondaire en air de travail (37).

3. Procédé suivant la revendication 1, **caractérisé en ce que** lors de l'exécution des mouvements de positionnement à composante verticale, en ce qui conceme le choix des pressions nécessaires pour les mouvements de positionnement, il est tenu compte de la force de la pesanteur qui sollicite les éléments de construction pour des directions de mouvements différentes.

4. Procédé suivant l'une quelconque des revendications 1 à 3 **caractérisé en ce que** de l'air sous pression qui s'écoule de la zone de la source d'alimentation principale en air de travail (31) dans la zone de la source d'alimentation secondaire en air de travail (37) est emmagasiné au moins par moments.

5. Procédé suivant l'une quelconque des revendications 1 à 4, **caractérisé en ce que** dans la zone d'un élément de construction pneumatique (33), qui est alimenté tant à partir de la source d'alimentation principale en air de travail (31) qu'à partir de la source d'alimentation secondaire en air de travail (37) pour assurer l'exécution de différents mouvements, il est utilisé un emmagasinage à air sous pression local pour de l'air de travail transféré.

6. Procédé suivant l'une quelconque des revendications 1 à 5, **caractérisé en ce que** par le transfert d'air de travail principal prélevé d'un élément de construction pneumatique dans fa zone d'un autre élément de construction pneumatique (33) il est effectué un accouplement de plusieurs éléments de construction, de construction essentiellement identique mais toutefois commandés en succession avec décalage de temps.

7. Procédé suivant l'une quelconque des revendications 1 à 6, **caractérisé en ce que** dans la zone de la source d'alimentation secondaire en air de travail (37), il est prévu une alimentation en air de travail secondaire qui est indépendante du transfert d'air de travail principal s'écoulant de la zone de l'élément de construction pneumatique (33).

8. Procédé suivant l'une quelconque des revendications 1 à 7, **caractérisé en ce que** l'élément de construction pneumatique (33) est actionné de telle façon que pour l'exécution d'un mouvement de positionnement subséquente il est utilisé tout d'abord de l'air sous pression transféré de la zone de la source d'alimentation principale en air de travail (31) et ensuite un air de travail secondaire s'écoulant d'une source d'air sous pression indépendante.
